# FASCICULE DE BREVET EUROPEEN

(11) **EP 1 405 557 B1**
(45) Date de publication et mention de la délivrance du brevet: **13.07.2005**
(21) Numéro de dépôt: 03360103.0
(22) Date de dépôt: 09.09.2003
(51) Int. Cl.: A01F 29/00, A01K 5/00

(54) **Machine de distribution**
Verteilmaschine
Distributing machine

(30) Priorité: 27.09.2002 FR 0212056
(43) Date de publication de la demande: 07.04.2004
(73) Titulaire: Kuhn-Audureau S.A., 85260 La Copechagniere (FR)
(72) Inventeur: Bonnaudet, Jean-Claude, 85260 La Copechagniere (FR); Rulleau, Samuel, 85140 Chauche (FR); Berniche, Alexandre, 85000 La Roche sur Yon (FR)
(74) Mandataire: Andres, Jean-Claude

(56) Documents cités:
- EP-A- 0 384 791
- EP-A- 0 993 765
- WO-A-01/47345
- WO-A-95/28077
- FR-A- 2 718 604

## Description

La présente invention se rapporte à une machine de distribution de produits alimentaires ou autres pour le bétail. Elle comporte une benne pour transporter les produits, au moins un ventilateur d'éjection qui est logé dans un carter situé à l'extrémité avant de la benne, lequel carter comprend une ouverture orientée vers la benne pour l'entrée des produits et une ouverture latérale pour la sortie de ces produits, au moins un tambour démêleur qui est muni d'outils de coupe et qui se situe à l'entrée du carter du ventilateur et des organes de retenue placés au-dessus dudit démêleur.

Une machine de ce genre est connue dans le brevet FR 2 784 541. Une machine comportant les caractéristiques du préambule de la revendication 1 est connue par le document WO-0147345-A.

Cette machine est notamment utilisée pour la distribution de foin, d'ensilage ou d'herbe enrubannée aux animaux. Dans le cas où l'utilisateur veut distribuer un produit unique tel que du foin, il le fait passer une seule fois par le démêleur, qui le débite et le transmet d'une manière régulière au ventilateur. Ce dernier l'éjecte alors jusque dans les auges des animaux.

Dans le cas où l'utilisateur veut distribuer une nourriture composée de différents produits, il faut préalablement créer un mélange homogène. Pour cela, il modifie la direction d'éjection et fait revenir lesdits produits dans la benne après leur passage par le démêleur et le ventilateur. Après deux ou trois passages, les aliments sont correctement mélangés et peuvent être distribués aux animaux.

Lors de cette opération de mélange, il arrive souvent que des paquets de produits de différente constitution forment une sorte de voûte devant le tambour démêleur et bloquent le processus. L'utilisateur doit alors intervenir manuellement pour dégager le passage. Cette intervention est fastidieuse et représente une importante perte de temps.

La présente invention a pour but de remédier aux inconvénients précités des machines connues.

A cet effet, une importante caractéristique de l'invention consiste en ce que les organes de retenue sont fixés sur une paroi déflectrice qui est déplaçable par rapport au tambour démêleur dans au moins deux positions différentes, une première dans laquelle elle est rapprochée du tambour démêleur et est proche de l'horizontale et une deuxième dans laquelle elle est plus éloignée dudit tambour démêleur et est davantage relevée vers la verticale de manière à avoir la section de passage entre la paroi déflectrice et le tambour démêleur beaucoup plus grande à son extrémité arrière qu'à son extrémité avant.

La première position de la paroi déflectrice pourra avantageusement être choisie pour la distribution d'un produit unique. Le rapprochement de la paroi déflectrice et des organes de retenue du tambour démêleur permet de réguler le passage du produit vers le ventilateur. Il est ainsi possible d'obtenir un débit d'éjection optimal en vue d'une répartition uniforme du produit dans les auges.

L'éloignement de la paroi déflectrice et des organes de retenue du tambour démêleur favorise le passage vers le ventilateur de produits de différente nature et se présentant en quantités irrégulières. Le risque d'arrêt par suite d'un blocage des produits au niveau du tambour démêleur est ainsi considérablement réduit. Cette position de la paroi déflectrice et des organes de retenue sera par conséquent utilisée de manière préférentielle pendant la phase qui consiste à mélanger les produits.

La paroi déflectrice est avantageusement déplaçable au moyen d'un vérin hydraulique pouvant être commandé depuis le tracteur. Le réglage de la position de ladite paroi ne nécessite ainsi pas un arrêt complet de la machine.

Selon une autre caractéristique de l'invention, chaque organe de retenue comporte une partie arrière et une partie avant pouvant être actives. Lorsque la paroi déflectrice est rapprochée du tambour démêleur, ce sont les parties arrière des organes de retenue qui sont actives. Elles retiennent alors les balles de fourrage dans la benne et empêchent les gros paquets de produits de s'engager dans le passage menant au ventilateur. Lorsque la paroi déflectrice est éloignée du tambour démêleur, ce sont les parties avant desdits organes de retenue qui sont actives. Celles-ci dirigent les gros paquets de produits vers le tambour démêleur et les retiennent jusqu'à ce qu'ils soient coupés et réduits en plus petits morceaux.

Le ou les tambours démêleurs comportent avantageusement des spires sur leur périphérie. Ces spires assurent un brassage et un entraînement des produits à déplacer vers le ventilateur et participent ainsi à éviter la formation d'une voûte de produits dans la benne.

D'autres caractéristiques et avantages de l'invention ressortiront des revendications et de la description ci-après d'un exemple de réalisation non limitatif de l'invention, avec référence aux dessins annexés dans lesquels :
- la figure 1 représente une vue de côté avec une coupe partielle d'une machine selon l'invention,
- la figure 2 représente une vue de détail de l'agencement selon l'invention dans une première position,
- la figure 3 représente une vue de détail de l'agencement selon l'invention dans une deuxième position,
- la figure 4 représente une vue de face des tambours démêleurs.

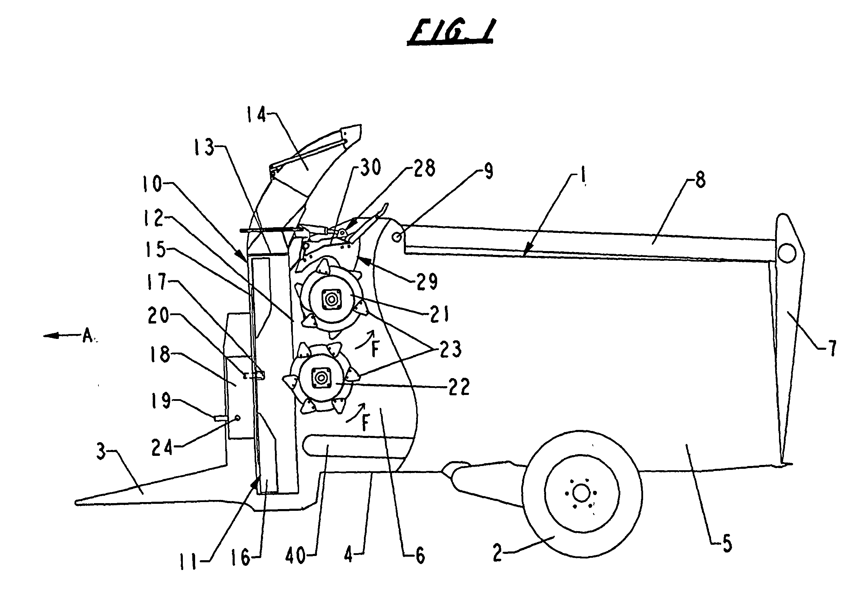

Telle qu'elle est représentée sur la figure 1, la machine selon l'invention comporte une benne (1) avec deux roues porteuses (2) et un timon (3) pour l'accrochage à un tracteur servant à animer la machine et à la déplacer. La flèche (A) indique le sens de déplacement normal de la machine. Les indications "avant" et "arrière" sont données en fonction de ce sens de déplacement. La benne (1) est avantageusement déplaçable en hauteur par rapport aux roues (2). Cela permet de l'abaisser jusqu'au sol lors de son chargement et de la soulever pour les déplacements.

Ladite benne (1) possède un fond (4) et deux parois latérales (5 et 6). Le côté arrière permet le chargement des produits dans la benne (1). Il peut être fermé au moyen d'un panneau (7) qui est fixé à un bras (8). Ce bras (8) peut être articulé sur la benne (1) au moyen d'un axe (9), de manière à permettre de déplacer ledit panneau (7). Le côté avant de la benne (1) est constitué par un carter (10), dans lequel est logé un ventilateur d'éjection (11). Ce carter (10) possède une ouverture (12) sur le côté qui est orienté vers l'intérieur de la benne et une sortie (13) sur son pourtour. Cette sortie (13) communique avec une goulotte orientable (14) pour diriger le flux des produits.

Le ventilateur d'éjection (11) est notamment constitué par un disque (15) muni de pales (16) et éventuellement de couteaux. Ce disque (15) est fixé sur un arbre (17) sensiblement horizontal qui permet de l'entraîner en rotation. A l'avant du carter d'éjection (10) est monté un boîtier de distribution (18). Celui-ci comporte une entrée (19) qui peut être reliée à un arbre de prise de force du tracteur, à l'aide d'un arbre intermédiaire. L'arbre (17) du ventilateur (11) est relié à une première sortie (20) dudit boîtier (18).

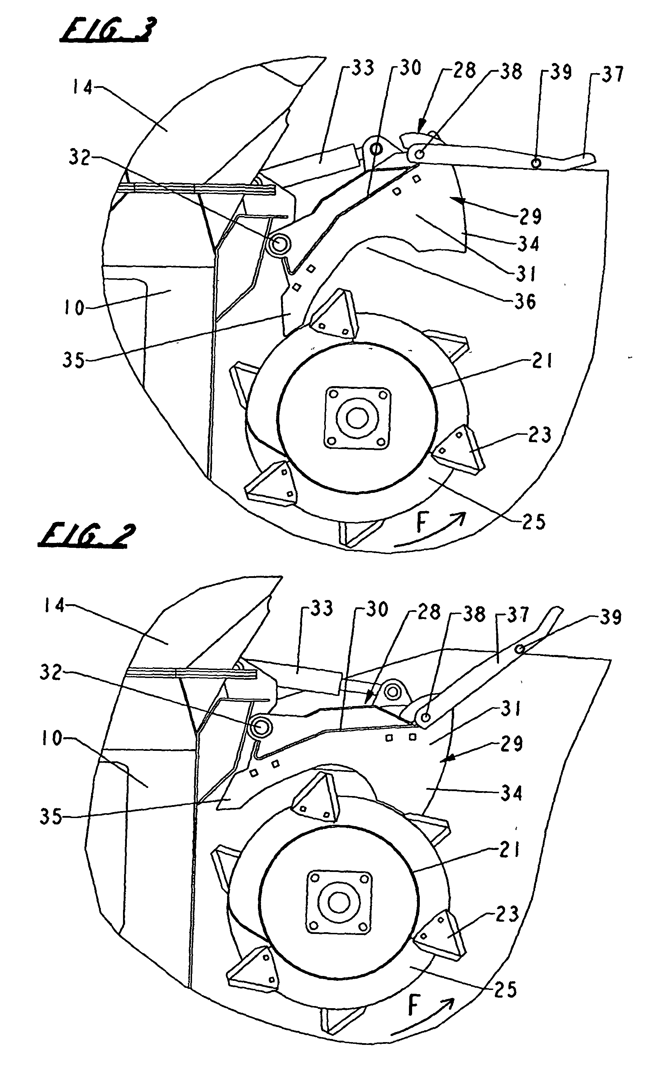

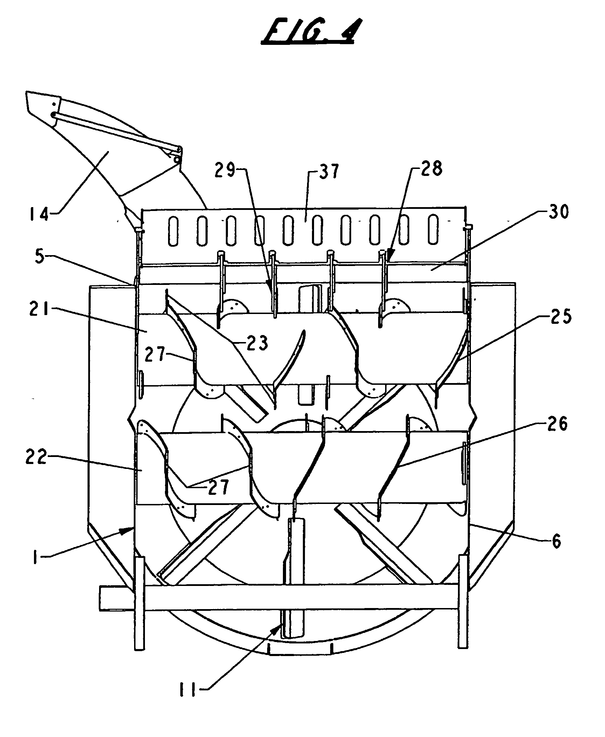

Devant l'ouverture d'entrée (12) du carter d'éjection (10) sont disposés deux tambours démêleurs (21 et 22) munis d'outils de coupe (23). Ces tambours (21 et 22) se situent ainsi entre les produits chargés dans la benne (1) et le ventilateur (11). Les tambours (21 et 22) sont agencés l'un au-dessus de l'autre à une distance telle qu'il y ait un léger espace entre les extrémités de leurs couteaux (23) respectifs. Ledit espace peut être de l'ordre de quelques centimètres. Le nombre de tambours (21, 22) pourrait cependant varier en fonction de la hauteur de la benne (1). Ces tambours (21 et 22) sont montés entre les parois latérales (5 et 6) de la benne (1). A leurs extrémités, ils sont guidés dans des paliers fixés auxdites parois latérales (5 et 6), de manière à pouvoir tourner autour de leurs axes géométriques longitudinaux. Ils peuvent être entraînés en rotation, par exemple à l'aide de moyens de transmission qui les relient à une deuxième sortie (24) du boîtier (18), ou bien à l'aide de moteurs hydrauliques. Il ressort notamment de la figure 4 que chaque tambour démêleur (21, 22) comporte sur sa périphérie des segments de spires (25 et 26). Le sens d'enroulement de chacun de ces segments (25, 26) peut être inversé par rapport à celui de ou des segments voisins, comme cela est représenté sur le tambour supérieur (21). Il est également possible d'inverser le sens d'enroulement du ou des segments (25, 26) situés sur une moitié de la longueur d'un tambour (21, 22) par rapport à celui du ou des segments situés sur l'autre moitié de la longueur dudit tambour (21, 22). Ce mode de réalisation est représenté sur le tambour inférieur (22). Les segments de spires (25, 26) comportent des sections droites (27) qui sont dirigées dans le sens de rotation (F) du tambour (21 ou 22) correspondant. Les couteaux (23) sont avantageusement fixés sur ces sections droites (27).

Au-dessus du tambour démêleur supérieur (21) est disposé un dispositif de régulation (28) comportant des organes de retenue (29) et une paroi déflectrice (30). Dans l'exemple représenté, ces organes de retenue (29) sont constitués par plusieurs plaques (31) sensiblement parallèles aux parois latérales (5 et 6). Ils sont fixés sur la paroi déflectrice (30) qui est déplaçable par rapport au tambour démêleur (21), dans au moins deux positions différentes. Dans une première position, qui est représentée sur la figure 2, la paroi déflectrice (30) est rapprochée du tambour démêleur (21) et est proche de l'horizontale. La section du passage entre la paroi déflectrice (30) et ledit tambour (21) est ainsi relativement constante. Dans une deuxième position, qui est représentée sur la figure 3, la paroi déflectrice (30) est en majeure partie plus éloignée du tambour démêleur (21) et est davantage relevée vers la verticale de manière à avoir la section du passage entre la paroi déflectrice (30) et le tambour démêleur (21) beaucoup plus grande à son extrémité arrière qu'à son extrémité avant.

La paroi déflectrice (30), qui porte les organes de retenue (29), est articulée sur un axe sensiblement horizontal (32), qui est solidaire du carter (10). Cet axe d'articulation (32) se situe près de l'extrémité avant de la paroi déflectrice (30). Celle-ci est déplaçable autour dudit axe (32) au moyen d'un vérin hydraulique (33), qui est lié d'une part à la paroi déflectrice (30) elle-même et, d'autre part, au carter (10). Ce vérin (33) est relié au moyen de conduits au dispositif hydraulique du tracteur et peut être commandé, de sorte qu'il s'ouvre ou se ferme, depuis ce dernier. Il permet ainsi de déplacer ladite paroi déflectrice (30) dans les positions décrites précédemment.

Chaque organe de retenue (29) comporte une partie arrière (34) et une partie avant (35) pouvant être actives. Ces deux parties (34 et 35) sont séparées par une découpe centrale (36). La partie arrière (34) est active lorsque la paroi déflectrice (30) occupe la première position de travail. Elle se situe alors au-dessus de la moitié arrière du tambour démêleur (21) et s'étend jusque dans la trajectoire des couteaux (23). Dans cette position, la partie avant (35) de chaque organe de retenue (29) est inactive.

Dans la deuxième position de travail de la paroi déflectrice (30), ce sont les parties avant (35) des organes de retenue (29) qui sont actives, tandis que leurs parties arrière (34) sont inactives. Lesdites parties avant (35) s'étendent alors jusque dans la trajectoire des couteaux (23), au-dessus de la moitié avant du tambour démêleur (21).

Un écran (37) est articulé sur l'extrémité arrière de la paroi déflectrice (30) au moyen d'un axe (38) qui est sensiblement parallèle à l'axe d'articulation (32). Cet écran (37) prolonge ladite paroi (30) en direction des produits contenus dans la benne (1). Il est par ailleurs articulé sur les parois (5 et 6) de la benne (1) au moyen d'un axe (39) qui est parallèle à l'axe d'articulation (38). Il pivote autour de ces deux axes (38 et 39), lorsque la paroi déflectrice (30) est déplacée dans ses différentes positions de travail.

Sur le fond (4) de la benne (1) est disposé un tapis (40) de déplacement des produits. Ce tapis (40) est constitué par une bande transporteuse qui est animée de sorte qu'elle amène les produits contenus dans la benne (1) aux tambours démêleurs (21 et 22).

Au travail, la benne (1) peut être chargée de fourrage ou de paille en vrac ou sous forme de balles ou de blocs. Pour la distribution directe, la machine est amenée sur le lieu de distribution au moyen du tracteur. Ensuite, le ventilateur (11) et les tambours démêleurs (21 et 22) sont entraînés en rotation. Ces deux tambours (21 et 22) tournent du bas vers le haut sur leur moitié arrière, c'est-à-dire dans le sens indiqué par les flèches (F). La paroi déflectrice (30) et les organes de retenue (29) sont rapprochés du tambour supérieur (21). Les couteaux (23) et les spires (25 et 26) des tambours (21 et 22) détachent une certaine quantité de produits de la masse contenue dans la benne (1) et la font passer dans le carter d'éjection (10). Les produits prélevés par le tambour inférieur (22) passent dans l'intervalle entre les deux tambours démêleurs (21 et 22). A ce niveau, le tambour supérieur (21) assure une sorte de régulation et refoule dans la benne (1) les produits qui arrivent en trop grande quantité.

Les produits prélevés par le tambour supérieur (21) passent dans le passage entre ce dernier et la paroi déflectrice (30). Les organes de retenue (29) retiennent les balles de fourrage dans la benne (1) et empêchent les gros paquets de produits d'accéder jusqu'à l'ouverture d'entrée (12) du carter (10). Ces paquets glissent vers le haut le long des parties arrière (34) de ces organes (29) et le long de l'écran (37) et retombent dans la benne (1). L'écartement entre les organes de retenue (29) est suffisant pour ne pas gêner le passage des produits correctement démêlés. Pendant la rotation des tambours démêleurs (21 et 22), leurs spires (25 et 26) brassent et entraînent les produits en vue d'éviter la formation d'une voûte. Lesdits produits arrivent ainsi de manière régulière au ventilateur (11), qui les éjecte au moyen des pales (16). Ils peuvent alors être dirigés à l'aide de la goulotte (14) vers les auges, lorsqu'il s'agit de fourrage ou vers les litières, lorsqu'il s'agit de paille.

Pour mélanger, avant la distribution, différents produits chargés dans la benne (1), les deux tambours démêleurs (21 et 22) et le ventilateur (11) sont entraînés en rotation comme cela a été décrit précédemment. Toutefois, la paroi déflectrice (30) est relevée et est, en majeure partie, éloignée du tambour supérieur (21) par pivotement autour de son axe d'articulation (32) au moyen du vérin hydraulique (33). Les organes de retenue (29) pivotent avec ladite paroi (30), de sorte que leurs parties arrière (34) s'éloignent du tambour (21) et que leurs parties avant (35) s'en approchent. Les paquets de produits ne sont alors plus arrêtés par les organes de retenue (29). Ils s'engouffrent dans le passage qui est plus ouvert entre le tambour (21) et la paroi déflectrice (30). Cette dernière dirige ces produits vers la moitié avant du tambour (21) où ils sont coupés par les couteaux (23), afin de pouvoir passer entre les extrémités avant (35) des organes de retenue. L'écran (37) empêche la projection des produits vers le haut et les guide vers le passage entre la paroi déflectrice (30) et le tambour (21). Lesdits produits coupés parviennent alors jusqu'au ventilateur (11) qui les éjecte par la goulotte (14), laquelle est orientée vers l'arrière, afin qu'ils retombent dans la benne (1) et se mélangent. Ces produits peuvent ainsi subir deux ou trois passages par les tambours démêleurs (21 et 22) et le ventilateur (11), de sorte à obtenir un mélange parfaitement homogène. Ensuite, l'orientation de la goulotte (14) peut être modifiée pour projeter les produits dans les auges.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel que défini dans les revendications.

## Revendications

1. Machine de distribution de produits alimentaires ou autres pour le bétail, comportant une benne (1) pour transporter les produits, au moins un ventilateur d'éjection (11) qui est logé dans un carter (10) situé à l'extrémité avant de la benne (1), lequel carter (10) comprend une ouverture (12) orientée vers la benne (1) pour l'entrée des produits et une ouverture latérale (13) pour la sortie des produits, au moins un tambour démêleur (21) qui est muni d'outils de coupe (23) et qui se situe à l'entrée du carter (10) du ventilateur (11) et des organes de retenue (29) placés au-dessus dudit tambour démêleur (21), dans laquelle les organes de retenue (29) sont fixés sur une paroi déflectrice (30) qui est déplaçable par rapport au tambour démêleur (21) dans au moins deux positions différentes, ***caractérisée en ce que*** dans une première de ces positions elle est rapprochée du tambour démêleur (21) et est proche de l'horizontale et dans une deuxième de ces positions elle est plus éloignée dudit tambour démêleur (21) et est davantage relevée vers la verticale, la section du passage entre la paroi déflectrice (30) et le tambour démêleur (21) étant beaucoup plus grande à son extrémité arrière qu'à son extrémité avant.

2. Machine selon la revendication 1, ***caractérisée par le fait* que** la paroi déflectrice (30) est articulée sur un axe sensiblement horizontal (32).

3. Machine selon la revendication 2, ***caractérisée par le fait* que** l'axe d'articulation (32) se situe près de l'extrémité avant de la paroi déflectrice (30).

4. Machine selon la revendication 2, ***caractérisée par le fait* que** la paroi déflectrice (30) est déplaçable autour de l'axe d'articulation (32) au moyen d'un vérin hydraulique (33).

5. Machine selon la revendication 1, ***caractérisée par le fait* que** chaque organe de retenue (29) comporte une partie arrière (34) et une partie avant (35) pouvant être actives.

6. Machine selon la revendication 5, ***caractérisée par le fait* que** la partie arrière (34) de chaque organe de retenue (29) est active lorsque la paroi déflectrice (30) occupe la première position de travail.

7. Machine selon la revendication 5, ***caractérisée par le fait* que** la partie avant (35) de chaque organe de retenue (29) est active lorsque la paroi déflectrice (30) occupe la deuxième position de travail.

8. Machine selon l'une quelconque des revendications 1 à 4, ***caractérisée par le fait* qu'**un écran (37) est articulé sur l'extrémité arrière de la paroi déflectrice (30).

9. Machine selon la revendication 8, ***caractérisée par le fait* que** écran (37) est articulé sur un axe (39) solidaire des parois (5 et 6) de la benne (1).

10. Machine selon la revendication 1, ***caractérisée par le fait* que** le tambour démêleur (21, 22) comporte sur sa périphérie des segments de spires (25, 26).

11. Machine selon la revendication 10, ***caractérisée par le fait* que** les segments de spires (25, 26) comportent des sections droites (27) qui sont dirigées dans le sens de rotation (F) et sur lesquelles sont fixés les couteaux (23).

12. Machine selon l'une quelconque des revendications 1, 10 ou 11, ***caractérisée par le fait* qu'**elle comporte un deuxième tambour démêleur (22) équipé de couteaux (23) et situé en dessous du premier tambour démêleur (21), à une distance telle qu'il y ait un léger espace entre les extrémités de leurs couteaux (23) respectifs.

## Patentansprüche

1. Maschine zur Verteilung von Futtermitteln oder anderem Gut für Vieh, mit einem Wagenkasten (1) zum Transport des Guts, mindestens einem in einem sich am Vorderende des Wagenkastens (1) befindenden Gehäuse (10) untergebrachten Ausschleudergebläse (11), wobei das Gehäuse (10) eine zum Wagenkasten (1) ausgerichtete Öffnung (12) für den Einlass des Guts und eine laterale Öffnung (13) für den Auslass des Guts umfasst, mindestens einer mit Schneidwerkzeugen (23) versehenen Auflockertrommel (21), die sich am Einlass des Gehäuses (10) des Gebläses (11) befindet, und über der Auflockertrommel (21) angeordneten Halteelementen (29), bei der die Halteelemente (29) an einer Ablenkwand (30) befestigt sind, die bezüglich der Auflockertrommel (21) in mindestens zwei verschiedene Stellungen verschiebbar ist, ***dadurch gekennzeichnet,* dass** sie in einer ersten dieser Stellungen der Auflockertrommel (21) angenähert ist und sich nahe der Horizontalen befindet, und in einer zweiten dieser Stellungen weiter von der Auflockertrommel (21) entfernt und weiter zur Vertikalen angehoben ist, wobei der Durchgangsquerschnitt zwischen der Ablenkwand (30) und der Auflockertrommel (21) an seinem hinteren Ende viel größer ist als an seinem vorderen Ende.

2. Maschine nach Anspruch 1, ***dadurch gekennzeichnet,* dass** die Ablenkwand (30) an einer im Wesentlichen horizontalen Achse (32) angelenkt ist.

3. Maschine nach Anspruch 2, ***dadurch gekennzeichnet,* dass** sich die Gelenkachse (32) nahe dem vorderen Ende der Ablenkwand (30) befindet.

4. Maschine nach Anspruch 2, ***dadurch gekennzeichnet,* dass** die Ablenkwand (30) mittels eines Hydraulikzylinders (33) um die Gelenkachse (32) verschiebbar ist.

5. Maschine nach Anspruch 1, ***dadurch gekennzeichnet,* dass** jedes Halteelement (29) einen hinteren Teil (34) und einen vorderen Teil (35) aufweist, die aktiv sein können.

6. Maschine nach Anspruch 5, ***dadurch gekennzeichnet,* dass** der hintere Teil (34) jedes Halteelementes (29) aktiv ist, wenn sich die Ablenkwand (30) in der ersten Arbeitsstellung befindet.

7. Maschine nach Anspruch 5, ***dadurch gekennzeichnet,* dass** der vordere Teil (35) jedes Halteelementes (29) aktiv ist, wenn sich die Ablenkwand (30) in der zweiten Arbeitsstellung befindet.

8. Maschine nach irgend einem der Ansprüche 1 bis 4, ***dadurch gekennzeichnet,* dass** an dem hinteren Ende der Ablenkwand (30) eine Abschirmung (37) angelenkt ist.

9. Maschine nach Anspruch 8, ***dadurch gekennzeichnet,* dass** die Abschirmung (37) an einer fest mit den Wänden (5 und 6) des Wagenkastens (1) verbundenen Achse (39) angelenkt ist.

10. Maschine nach Anspruch 1, ***dadurch gekennzeichnet,* dass** die Auflockertrommel (21, 22) an ihrem Umfang Windungssegmente (25, 26) aufweist.

11. Maschine nach Anspruch 10, ***dadurch gekennzeichnet,* dass** die Windungssegmente (25, 26) gerade Abschnitte (27) aufweisen, die in Drehrichtung (F) ausgerichtet sind und an denen die Messer (23) befestigt sind.

12. Maschine nach irgend einem der Ansprüche 1, 10 oder 11, ***dadurch gekennzeichnet,* dass** sie eine mit Messern (23) versehene zweite Auflockertrommel (22) aufweist, die sich in einem solchen Abstand unter der ersten Auflockertrommel (21) befindet, dass zwischen den Enden ihrer jeweiligen Messer (23) ein geringer Zwischenraum entsteht.

## Claims

1. Machine for distributing food or other products for livestock, comprising a tub (1) for transporting the products, at least one ejection fan (11) which is housed in a housing (10) situated at the front end of the tub (1), the said housing (10) comprising an opening (12) oriented towards the tub (1) for the products to enter and a lateral opening (13) for the products to exit, at least one unravelling drum (21) which is provided with cutting tools (23) and is situated at the entrance of the housing (10) of the fan (11) and retaining elements (29) placed above the said unravelling drum (21), in which the retaining elements (29) are fastened to a deflector wall (30) which can be moved relative to the unravelling drum (21) into at least two different positions, ***characterized in* that** in a first one of these positions it is brought near to the unravelling drum (21) and is close to the horizontal and in a second one of these positions it is further away from the said unravelling drum (21) and is raised more towards the vertical, the section of the passage between the deflector wall (30) and the unravelling drum (21) being much larger at its rear end than at its front end.

2. Machine according to Claim 1, ***characterized in* that** the deflector wall (30) is articulated on a substantially horizontal axis (32).

3. Machine according to Claim 2, ***characterized in* that** the articulation shaft (32) is situated close to the front end of the deflector wall (30).

4. Machine according to Claim 2, ***characterized in* that** the deflector wall (30) can be moved about the axis of articulation (32) by means of a hydraulic jack (33).

5. Machine according to Claim 1, ***characterized in* that** each retaining element (29) comprises a rear part (34) and a front part (35) that can be active.

6. Machine according to Claim 5, ***characterized in* that** the rear part (34) of each retaining element (29) is active when the deflector wall (30) occupies the first working position.

7. Machine according to Claim 5, ***characterized in* that** the front part (35) of each retaining element (29) is active when the deflector wall (30) occupies the second working position.

8. Machine according to any one of Claims 1 to 4, ***characterized in* that** a screen (37) is articulated on the rear end of the deflector wall (30).

9. Machine according to Claim 8, ***characterized in* that** the screen (37) is articulated on an axis (39) rigidly fastened to the walls (5 and 6) of the tub (1).

10. Machine according to Claim 1, ***characterized in* that** the unravelling drum (21, 22) comprises spiral segments (25, 26) on its periphery.

11. Machine according to Claim 10, ***characterized in* that** the spiral segments (25, 26) comprise straight sections (27) that are directed in the direction of rotation (F) and on which knives are fastened (23).

12. Machine according to any one of Claims 1, 10 or 11, ***characterized in* that** it comprises a second unravelling drum (22) fitted with knives (23) and situated below the first unravelling drum (21), at a distance such that there is a small space between the ends of their respective knives (23).
